# FASCICULE DE BREVET EUROPEEN

(11) **EP 4 384 425 B1**
(45) Date de publication et mention de la délivrance du brevet: **18.11.2026**
(21) Numéro de dépôt: 22747083.8
(22) Date de dépôt: 29.06.2022
(51) Int. Cl.: B60T 7/08, B60T 13/74, B60T 7/10

(54) **DISPOSITIF DE FREIN DE STATIONNEMENT À COMMANDE AMÉLIORÉE**
FESTSTELLBREMSVORRICHTUNG MIT VERBESSERTER STEUERUNG
PARKING BRAKE DEVICE WITH IMPROVED COMMAND

(30) Priorité: 13.08.2021 FR 2108685
(43) Date de publication de la demande: 19.06.2024
(73) Titulaire: Hitachi Astemo France, 93700 Drancy (FR); Hitachi Astemo Heilbronn GmbH, 74072 Heilbronn (DE)
(72) Inventeur: SASSO, Julien, 77420 CHAMPS SUR MARNE (FR); WANG, Weiqiao, 75017 PARIS (FR); PATRAO CARQUEIJO, Alex, 93500 PANTIN (FR); DEMANDRE, Maxime, 70469 STUTTGART (DE)
(74) Mandataire: Santarelli
(86) Numéro de dépôt international: PCT/FR2022/051303
(87) Numéro de publication internationale: WO 2023/017217

(56) Documents cités:
- US-A1- 2013 096 796
- US-A1- 2015 246 662
- US-A1- 2015 274 139
- US-B2- 9 975 536

## Description

La présente invention se rapporte à un frein de stationnement à commande améliorée.

Les freins de stationnement modernes sont souvent électromécaniques, commandés par un motoréducteur qui leur est intégré, en fonction de stratégies prédéfinies et sous l'impulsion d'une unité de contrôle du moteur électrique. Les commandes peuvent être déclenchées soit par le conducteur du véhicule, soit automatiquement d'après des paramètres de conduite, si le frein de stationnement est aussi utilisé comme frein de secours pendant les trajets du véhicule.

Il arrive que, tandis que le véhicule est à l'arrêt, le conducteur déclenche une commande de serrage du frein de stationnement par erreur ou qu'il se ravise aussitôt après, ce qui est d'autant plus plausible que la manette de tels freins de stationnement électromécaniques est souvent un bouton sur lequel les appuis commandent alternativement les serrages et les desserrages, sans permettre de discerner directement quelle sera la commande appliquée. Mais quand une commande a été transmise à l'unité de contrôle, elle est exécutée jusqu'à son terme avant qu'une commande suivante, annulant la première, ne soit considérée.

L'art antérieur comprend le document US2013/096796 A1. Le procédé de freinage qui y est décrit comprend des remplacements d'une stratégie ordinaire par une stratégie de serrage limité dans certaines circonstances, notamment quand un capteur de température du frein est défaillant. Le procédé comprend alors des vérifications d'un mode fou ou « crazy mode », d'après lequel le bouton de commande du frein est sans cesse pressé. A chaque fois qu'une pression du bouton est constatée, une valeur de comptage est diminuée dans un index. Si cette valeur atteint zéro, la stratégie de serrage limité remplace la stratégie de serrage normal. La fonction de cette partie du procédé est d'instaurer une sécurité en évitant des serrages excessifs, mais pas de corriger rapidement des commandes incorrectes sur le bouton. En effet, une stratégie de serrage en cours pendant le « crazy mode » n'est pas interrompue, mais remplacée par une autre stratégie, et seulement quand une valeur dans un index est devenue nulle, éventuellement après un grand nombre de commandes successives. Enfin, il est précisé que le changement de stratégie s'applique seulement aux serrages, mais pas aux desserrages, qui sont toujours effectués normalement. Une unité de contrôle moteur d'un frein électromécanique de stationnement de véhicule automobile est notamment connue par le document US 2015/246662 A1.

L'invention a pour but d'éliminer les pertes de temps consécutives à des commandes erronées ou involontaires du frein de stationnement, en permettant une annulation plus rapide de l'effet de ces commandes erronées quand elles sont corrigées immédiatement.

Selon l'invention, la stratégie de serrage n'est plus alors menée à son terme, mais elle est interrompue dès que la commande a été annulée par un nouvel actionnement de la manette.

Les interruptions des stratégies de commande des freins électromécaniques sont inhabituelles, et d'autant plus si elles interrompent un serrage déjà commandé du frein. Le cas particulier d'un frein de stationnement est différent, puisque le véhicule est à l'arrêt ou à faible vitesse quand les commandes originaires du véhicule sont prises en compte, et que les dangers associés à la conduite sont donc absents.

Selon la revendication 1, l'invention est relative à une unité de contrôle moteur d'un frein électromécanique de stationnement de véhicule automobile, fournissant des commandes de serrage et de desserrage du frein à un moteur électrique d'un actionneur du frein, lesdites commandes étant régies par des stratégies prédéfinies en réponse à des impulsions données sur une manette par un occupant du véhicule, caractérisée en ce qu'elle est conçue, si une deuxième action suit une première action sur la manette alors qu'une première commande, déclenchée par la première action, est encore en cours, pour commencer une deuxième commande d'après la seconde action immédiatement, en interrompant la première commande.

Notamment, l'invention s'applique si la première action est une commande de desserrage du frein.

La manette est avantageusement un bouton (ou un dispositif analogue à état d'actionnement unique), dont les commandes sont alternativement, par construction, des commandes de serrage et de desserrage du frein.

L'invention est particulièrement applicable à des systèmes où les stratégies imposent des commandes de serrage qui, non interrompues, donnent un effort final déterminé de serrage du frein, et des commandes de desserrage qui, non interrompues, donnent des courses de longueur déterminée de l'actionneur du frein.

Si alors la première commande est une commande de serrage, il est avantageux que la deuxième commande ait une durée imposée semblable à la première commande.

Un autre aspect de l'invention est un dispositif de freinage correspondant d'un véhicule automobile ; ce dispositif comprenant le frein de stationnement, l'actionneur du frein, le moteur électrique de commande de l'actionneur et l'unité de contrôle moteur selon la revendication 1.

Un autre aspect encore est un véhicule automobile comprenant ce dispositif de freinage, le frein pouvant notamment être installé à une roue non motrice du véhicule.

Les différents aspects, caractéristiques et avantages de l'invention apparaîtront mieux à la description détaillée d'une réalisation concrète de celle-ci, donnée à titre purement illustratif, qui est maintenant faite au moyen des figures suivantes :
Figure 1 représente schématiquement un véhicule automobile avec son système de freins de stationnement et les moyens pour le commander ;
Figure 2 un frein de stationnement électromécanique ;
Figure 3 une stratégie existante usuelle de commande du frein ;
Figure 4 une stratégie différente, conforme à l'invention.

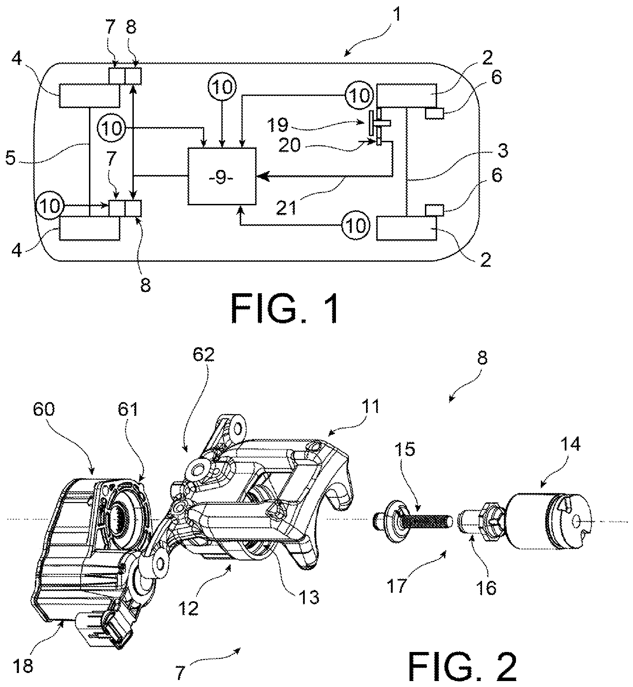

La figure 1 représente une automobile 1 équipée de deux roues avant 2 motrices et directrices sur un essieu avant 3, et de deux roues arrière 4 non motrices et non directrices sur un essieu arrière 5. Chacune des roues avant 2 est ici équipée d'un frein principal 6 de service actionné directement par le conducteur en appuyant sur une pédale de freinage, et chacune des roues arrière 4 est équipée d'un frein électromécanique 7 (appelé simplement « frein » ci-après) équipé d'un actionneur 8 commandé par une même unité de contrôle moteur 9. Chacun des freins 7 fonctionne comme un frein de stationnement que le conducteur du véhicule fait passer d'un état desserré à un état serré pour immobiliser l'automobile 1, et inversement pour lui permettre de se déplacer. Assis derrière un tableau de bord 19, le conducteur presse sur une manette telle qu'un bouton 20 de basculement entre l'état serré et l'état desserré des freins 7, et une impulsion électrique correspondante est transmise à l'unité centrale de commande 9 par une ligne de transmission 21.

Les freins 7 peuvent aussi, dans divers modèles de véhicules, être utilisés en freins de service en même temps que les freins principaux 6 quand le conducteur exerce un freinage, ou en freins de secours pour compléter l'action des freins principaux 6 ; l'unité de contrôle moteur 9 exploite alors les indications de capteurs 10 montés sur le véhicule et qui mesurent divers paramètres de conduite, sans que le conducteur intervienne. Ces possibilités supplémentaires de commande des freins 7 n'ont toutefois pas d'influence sur l'invention, qui est appliquée quand le véhicule est stationnaire, ou quasiment stationnaire.

La figure 2 illustre schématiquement un exemple de réalisation connue du frein 7, d'après une représentation en éclaté. Le frein 7 comprend un étrier 11 uni à un boîtier 12 de forme cylindrique. Il comprend aussi un motoréducteur 60 dont une bride 61 est unie à une bride 62 à la face arrière du boîtier 12 par des vis (non représentées ici). Le motoréducteur 60 contient un moteur électrique 18 et des engrenages de réduction de la vitesse de rotation dudit moteur électrique 18. Le boîtier 12 comprend une cavité hydraulique 13 appelée cylindre, ouverte vers l'avant (à droite à la figure 2) et dans laquelle coulisse un piston 14 porteur d'un patin mobile (non représenté). Les freinages sont réalisés en faisant coulisser le piston 14 vers l'avant, pour rapprocher le patin mobile d'un patin fixe situé à l'extrémité avant de l'étrier 11 et enserrer un disque de la roue arrière 4 entre ces patins. Ce mouvement du piston 14 est obtenu, quand le frein 7 travaille en frein de service, par l'application d'une pression hydraulique dans la cavité hydraulique 13 pendant la conduite du véhicule : cette pression s'exerce sur la face arrière du piston 41 et le repousse vers l'avant. Si toutefois le frein 7 est commandé en frein de stationnement ou en frein de secours, les freinages sont réalisés par l'utilisation du moteur électrique 18 d'après des stratégies imposées par l'unité de contrôle moteur 9. Le moteur électrique 18 met en mouvement les engrenages du motoréducteur 60, ce qui fait tourner une vis 15 qui s'étend dans la cavité hydraulique 13. La vis 15 est en prise avec un écrou 16 sur lequel une face arrière du piston 14 est alors en butée. Les rotations de la vis 15 sont converties en translations de l'écrou 16 et du piston 14, qui se déplace en fonction de la durée d'actionnement du moteur électrique 18. L'actionneur 8 considéré ici comprend notamment le motoréducteur 60 et donc son moteur électrique 18, et le système 17 composé de la vis 15 et de l'écrou 16. L'invention pourrait être appliquée à d'autres véhicules et d'autres freins que ceux-ci.

Quand le frein 7 est déplacé par l'actionneur 8, ce dernier est commandé par l'unité de contrôle moteur 9 selon des stratégies prédéfinies qui lui ont été enseignées. Dans le cas de basculements entre l'état desserré et l'état serré par le conducteur désireux de stationner ou au contraire de repartir, des stratégies usuelles consistent à instaurer une force déterminée de serrage du frein 7 pour le serrage, et une course déterminée de l'actionneur 8 ou du piston 14 pour le desserrage. Dans les deux cas, ces stratégies sont toujours menées jusqu'à ce que l'effort de serrage soit atteint, ou que la course de desserrage soit complétée. C'est encore vrai dans le document cité plus haut, même si l'effort de serrage peut être réduit par rapport à l'effort normal.

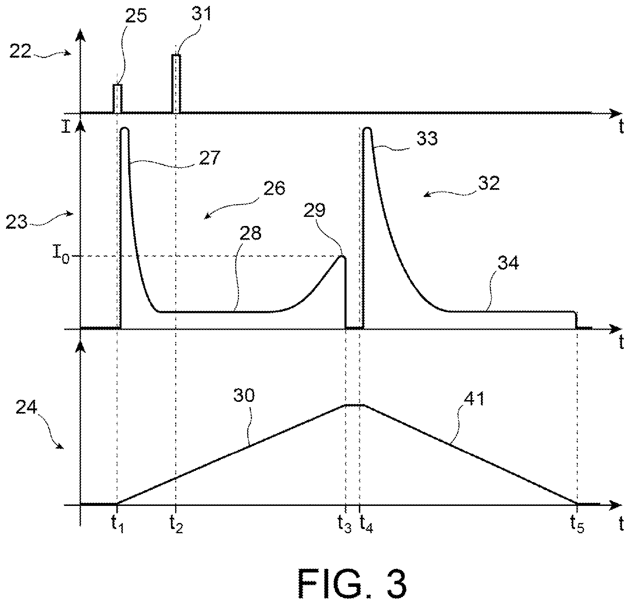

On se reporte maintenant à la figure 3. Un diagramme supérieur 22 indique des pressions réalisées par le conducteur sur le bouton 20, un diagramme médian 23 illustre l'intensité du courant électrique I qui traverse le moteur électrique 18 pour le commander, et un diagramme inférieur 24 indique la course accomplie par le piston 14 : ces trois diagrammes 22, 23 et 24 sont tous donnés en fonction du temps t, en abscisses.

Le conducteur donne une première impulsion 25 à un instant t₁, qui déclenche une première commande 26, ici de serrage du frein 7. L'unité de contrôle moteur 9 ferme un circuit électrique sur lequel le moteur électrique et une batterie, ou un autre moyen de fourniture d'électricité sont placés, ce qui met en mouvement le moteur électrique 18. L'intensité dans le circuit électrique s'ajuste en fonction de l'effort de serrage exercé. On peut distinguer trois périodes dans l'évolution du courant I fourni : une première période de pic 27, qui correspond à un rattrapage des jeux dans l'actionneur 8, pendant laquelle l'intensité I est élevée, une deuxième période de plateau 28 beaucoup plus longue pendant laquelle l'intensité I est au contraire beaucoup plus faible et à peu près constante et qui correspond à une course à vide de l'actionneur 8, et une troisième période de croissance 29 pendant laquelle l'intensité I s'élève régulièrement et qui correspond à un serrage effectif et progressif du frein 7. L'intensité I est alors à peu près proportionnelle à l'effort de serrage. La commande s'arrête à un instant t₃, quand un seuil d'intensité d'arrêt I₀ déterminé, correspondant à un effort de serrage souhaité, a été atteint. L'actionneur 8 se déplace à vitesse constante pendant cette commande 26, ce qu'illustre la partie correspondante, ou première partie 30, du diagramme inférieur 24, dont la pente est uniforme.

Si une deuxième impulsion 31 est donnée par le conducteur à l'instant t₂ très peu de temps après t₁, une deuxième commande 32, relative à un desserrage du frein 7, est appliquée au moteur électrique 18. Elle comprend une première période de pic 33, à décroissance progressive, qui correspond à la fois au rattrapage des jeux dans l'actionneur 8 et à un desserrage progressif du frein 7, puis une seconde période de plateau 34 où l'intensité I est faible et uniforme, et qui correspond à une course à vide de l'actionneur 8, afin de le ramener approximativement à son état initial précédant la première impulsion 25, ce qu'illustre la deuxième partie 41 du diagramme inférieur 24, à pente descendante uniforme, et à peu près symétrique de la première partie 30. La deuxième commande 32 commence à un instant t₄ peu après t₃, et elle finit à un instant ultérieur t₅. Comme la stratégie usuelle impose un effort final ou une longueur de course invariable, la durée (t₅-t₄) de la deuxième commande 32 est analogue à celle (t₃-t₁) de la première commande 26, est la deuxième commande 32 commence seulement quand la première commande 26 est achevée, ce qui signifie que l'instant t₄ de départ est nettement postérieur à celui de la deuxième impulsion 31. Le conducteur ressent désagréablement ce temps de réaction en cas d'une commande involontaire ou erronée de stationnement du véhicule, qu'il voudrait corriger immédiatement.

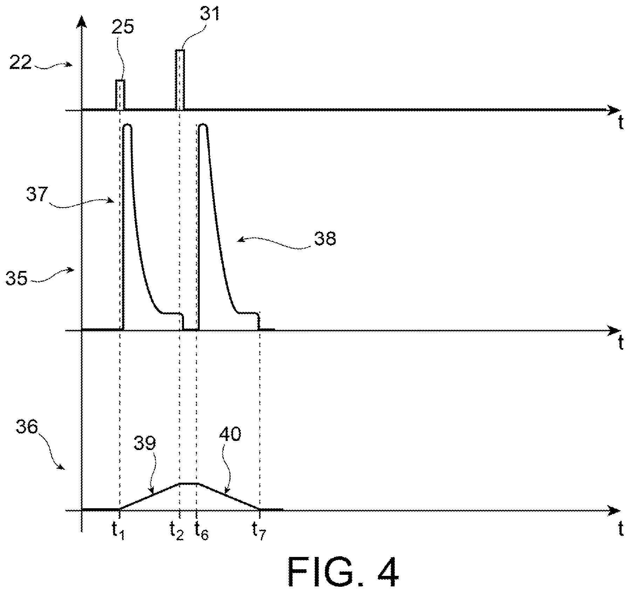

C'est pourquoi il est prévu, d'après l'invention, de modifier la stratégie de commande du frein 7 d'après la figure 4. On retrouve trois diagrammes en fonction du temps t, dont le diagramme supérieur des impulsions fournies par le conducteur, qui est identique à celui de la figure 3 et porte donc encore la référence 22, un diagramme médian 35, et un diagramme inférieur 36 homologues aux mêmes diagrammes 23 et 24 de la figure 3.

La première commande 37 appliquée d'après l'invention à l'instant t₁ de la première impulsion 25 commence comme la première commande 26 précédente, mais elle s'interrompt désormais à l'instant t₂ d'émission de la deuxième impulsion 26 destinée à annuler la précédente. La deuxième commande 38 peut alors commencer à un instant t₆ immédiatement suivant, correspondant seulement à l'expiration d'une durée de réaction du système. Il est prévu qu'elle aussi soit abrégée, et cesse à un instant t₇ après une durée (t₇-t₆) égale à la durée elle-même abrégée (t₂-t₁) de la première commande 37. On garantit ainsi le retour de l'actionneur 8 et du frein 7 à un état à peu près immuable de desserrage. Le diagramme inférieur 36 comporte encore, en conséquence de cela, deux parties 39 et 40 symétriques qui illustrent le retour du système à son état initial dès l'instant t₇, donc beaucoup plus vite qu'en appliquant la stratégie usuelle.

Si la première commande, que le conducteur interrompt par une deuxième commande opposée est une commande de desserrage, un gain de temps analogue est obtenu, car la première commande peut être interrompue sans délai, et la deuxième commande, qui commence immédiatement après, est elle aussi abrégée car le seuil d'intensité d'arrêt est atteint plus rapidement.

Un avantage de l'invention est donc une accélération des commandes du frein 7 de stationnement ; d'autres avantages sont une économie d'énergie électrique, et une diminution de l'usure du frein 7 grâce à la diminution d'amplitude des mouvements.

L'invention est appliquée seulement quand les circonstances le permettent, c'est-à-dire quand le véhicule est stationnaire ou presque, et que le stationnement est envisageable. Le fonctionnement du frein 7 n'est pas modifié dans d'autres circonstances.

### Nomenclature

1 Automobile
2 Roues avant
3 Essieu avant
4 Roues arrière
5 Essieu arrière
6 Frein principal
7 Frein électromécanique
8 Actionneur
9 Unité de contrôle moteur
10 Capteurs
11 Étrier
12 Boîtier
13 Cavité hydraulique
14 Piston
15 Vis
16 Écrou
17 Système vis-écrou
18 Moteur électrique
19 Tableau de bord
20 Bouton
21 Ligne de transmission
22, 23, 24 Diagrammes
25 Première impulsion
26 Première commande
27 Pic
28 Plateau
29 Période de croissance
30 Première partie de course
31 Deuxième impulsion
32 Deuxième commande
33 Pic
34 Plateau
35, 36 Diagrammes
37 Première commande
38 Deuxième commande
39, 40 Parties de course
60 Motoréducteur
61 Bride
62 Bride
41 Deuxième partie de course
I Intensité de courant électrique
Seuil d'intensité d'arrêt de commande
t Temps
t₁ à t₇ Instants des commandes

## Revendications

1. Unité de contrôle moteur (9) d'un frein électromécanique (7) de stationnement de véhicule automobile, fournissant des commandes de serrage et de desserrage du frein à un moteur électrique (18) d'un actionneur (8) du frein (7), lesdites commandes étant régies par des stratégies prédéfinies en réponse à des impulsions données sur une manette (20) par un occupant du véhicule, **caractérisée en ce qu'**elle est conçue, si une deuxième action suit une première action sur la manette alors qu'une première commande, déclenchée par la première action, est encore en cours, pour commencer une deuxième commande d'après la seconde action immédiatement, en interrompant la première commande.

2. Unité de contrôle moteur selon la revendication 1, **caractérisée en ce que** la première action est une commande de desserrage du frein.

3. Unité de contrôle moteur selon l'une quelconque des revendications 1 ou 2, **caractérisée en ce que** la manette (20) est un bouton, et les commandes sont alternativement des commandes de serrage et de desserrage du frein.

4. Unité de contrôle moteur selon l'une quelconque des revendications 1 à 3, **caractérisée en ce que** les stratégies imposent des commandes de serrage qui, non interrompues, donnent un effort final déterminé de serrage du frein, et des commandes de desserrage qui, non interrompues, donnent des courses de longueur déterminée de l'actionneur du frein.

5. Unité de contrôle moteur selon la revendication 4, **caractérisée en ce que**, si la première commande est une commande de serrage, la seconde commande a une durée imposée semblable à la première commande.

6. Dispositif de freinage d'un véhicule automobile, comprenant un frein (7) de stationnement, un actionneur (8) du frein, un moteur électrique (18) de commande de l'actionneur, une manette (20) et une unité de contrôle moteur (9) selon l'une quelconque des revendications précédentes.

7. Véhicule automobile, **caractérisé en ce qu'**il comporte le dispositif de freinage selon la revendication 6.

8. Véhicule automobile selon la revendication 7, **caractérisé en ce que** le frein (7) est installé à une roue non motrice du véhicule.

## Patentansprüche

1. Motorsteuereinheit (9) einer elektromechanischen Feststellbremse (7) eines Kraftfahrzeugs, die Befehle zum Feststellen und Lösen der Bremse an einen Elektromotor (18) eines Stellglieds (8) der Bremse (7) liefert, wobei die Befehle durch vordefinierte Strategien als Reaktion auf Impulse gesteuert werden, die von einem Insassen des Fahrzeugs auf einen Hebel (20) gegeben werden, **dadurch gekennzeichnet, dass** er so ausgelegt ist, dass, wenn eine zweite Aktion auf eine erste Aktion an dem Hebel folgt, während eine erste Betätigung, ausgelöst durch die erste Aktion, noch läuft, ein zweiter Befehl gemäß der zweiten Aktion sofort gestartet wird, indem der erste Befehl unterbrochen wird.

2. Motorsteuereinheit nach Anspruch 1, **dadurch gekennzeichnet, dass** die erste Aktion ein Befehl zum Lösen der Bremse ist.

3. Motorsteuereinheit nach einem der Ansprüche 1 oder 2, **dadurch gekennzeichnet, dass** der Hebel (20) ein Knopf ist und die Befehle abwechselnd Befehle zum Feststellen und Lösen der Bremse sind.

4. Motorsteuereinheit nach einem der Ansprüche 1 bis 3, **dadurch gekennzeichnet, dass** die Strategien Befehle zum Feststellen vorschreiben, die, wenn sie nicht unterbrochen werden, eine bestimmte Endkraft zum Festellen der Bremse bieten, sowie Befehle zum Lösen vorschreiben, die, wenn sie nicht unterbrochen werden, Hübe einer bestimmten Länge des Stellglieds der Bremse bieten.

5. Motorsteuereinheit nach Anspruch 4, **dadurch gekennzeichnet, dass**, wenn der erste Befehl ein Befehl zum Feststellen ist, der zweite Befehl eine dem ersten Befehl ähnliche vorgegebene Dauer aufweist.

6. Bremsvorrichtung eines Kraftfahrzeugs, umfassend eine Feststellbremse (7), ein Stellglied (8) der Bremse, einen Elektromotor (18) zur Steuerung des Stellglieds, einen Hebel (20) und eine Motorsteuereinheit (9) nach einem der vorhergehenden Ansprüche.

7. Kraftfahrzeug, **dadurch gekennzeichnet, dass** es die Bremsvorrichtung nach Anspruch 6 aufweist.

8. Kraftfahrzeug nach Anspruch 7, **dadurch gekennzeichnet, dass** die Bremse (7) an einem nicht angetriebenen Rad des Fahrzeugs installiert ist.

## Claims

1. Motor control unit (9) of an electromechanical motor vehicle parking brake (7), supplying brake application and release commands to an electric motor (18) of an actuator (8) of the brake (7), said commands being governed by predefined strategies in response to inputs given to a controller (20) by an occupant of the vehicle, **characterized in that** it is designed, if a second action follows a first action on the controller while a first command, triggered by the first action, is still in progress, to start a second command according to the second action immediately, interrupting the first command.

2. Motor control unit according to claim 1, **characterized in that** the first action is a brake release command.

3. Motor control unit according to either one of claims 1 or 2, **characterized in that** the controller (20) is a button, and the commands are alternately brake application and brake release commands.

4. Motor control unit according to any one of claims 1 to 3, **characterized in that** the strategies impose application commands which, uninterrupted, produce a given final brake application force, and release commands which, uninterrupted, produce brake actuator strokes of a given length.

5. Motor control unit according to claim 4, **characterized in that** if the first command is an application command, the second command has an imposed duration similar to the first command.

6. Motor vehicle braking device, comprising a parking brake (7), an actuator (8) of the brake, an electric motor (18) controlling the actuator, a controller (20) and a motor control unit (9) according to any one of the preceding claims.

7. Motor vehicle, **characterized in that** it has the braking device according to claim 6.

8. Motor vehicle according to claim 7, **characterized in that** the brake (7) is fitted to a non-driven wheel of the vehicle.
